# EUROPEAN PATENT APPLICATION

(11) **EP 4 395 100 A1**
(43) Date of publication of application: **03.07.2024**
(21) Application number: 22217181.1
(22) Date of filing: 29.12.2022
(51) Int. Cl.: H02J 3/36, H02M 7/757, H02J 1/08

(54) **HIGH-VOLTAGE POWER TRANSMISSION ARRANGEMENT**

(71) Applicant: Siemens Energy Global GmbH & Co. KG, 81739 München (DE)
(72) Inventor: Westerweller, Thomas, 96135 Stegaurach (DE)

(57) **Abstract**

The present invention relates to a high-voltage power transmission arrangement (1) and to a bipole HVDC station (100). The arrangement according to the invention comprises a first DC network element (11), a second DC network element (21), a main bus (4) connected to the first DC network element via a first main gate (12), and with the second DC network element via a second main gate (22), a transfer bus (5) connected to the first DC network element via a first transfer switch (13), with the second DC network element via a second transfer switch (23), and with the main bus via a transfer gate (6), wherein each of the main and transfer gates comprises a fault separation device (FSD) and a residual current switch (RCS) .

## Description

The present invention relates to a high-voltage power transmission arrangement.

Generally, a DC network (DC grid) comprises one or several connected DC lines. In addition, DC networks usually comprise further DC network elements to initiate and/or operate the power transmission through the network, namely power exchange elements such as converters (AC/DC and/or DC/DC), energy storage devices, DC choppers, DC cables, DC overhead lines (or cables), DC circuit breakers, energy sources (e.g. PV plants) and suitable loads. The present invention particularly relates to HVDC networks, i.e. networks with a nominal voltage of more than 100 kV DC.

In contrast to known and implemented point-to-point HVDC connections, HVDC multi-terminal or meshed systems generally have the task of connecting more than one DC line, more than two AC/DC converters and other operating equipment.

In an HVDC switching station, DC network elements are connected to a main bus via devices providing the necessary functionalities to open and close the connection between the respective element and the bus, during normal operation as well as under fault conditions. The set of devices installed between the main bus and the network element is usually referred to as a gate. Depending on switching conditions and reliability requirements, the amount of equipment needed and thus the investment costs for a switching station can be significant.

The object of the present invention is therefore to provide a high-voltage power transmission arrangement as cost-effective and reliable as possible.

This object is according to a first aspect achieved by an arrangement according to claim 1.

According to the invention, the high-voltage power transmission arrangement comprises a first DC network element, a second DC network element, a main bus connected to the first DC network element via a first main gate, and with the second DC network element via a second main gate, a transfer bus connected to the first DC network element via a first transfer switch, with the second DC network element via a second transfer switch, and with the main bus via a transfer gate, wherein each of the main and transfer gates comprises a fault separation device and a residual current switch. The transfer gate can be configured in parallel to any other gate by means of the transfer bus. As the transfer gate comprises functionalities for opening the connection between the transfer bus and the main bus, it can re-open immediately upon unsuccessful closing (e.g., a persisting fault condition in an energized network element). After coupling the network element with the main bus via the transfer gate, the transfer gate is by-passed by closing the corresponding main gate. Deactivation of a peak current suppression functionality of the transfer bus is not necessary at any time. The arrangement according to the invention provides an improved switching station significantly reducing the amount of installed equipment but adding increased availability of network elements during gate maintenance.

In most applications the first and/or the second DC network elements each comprise DC operating equipment, in particular a DC transmission line and/or an AC/DC converter.

Preferably, the first and/or the second transfer switch are disconnectors. Disconnectors are relatively cost-efficient devices with low breaking capacity, which effectively disconnect a line after the current has been interrupted by some other switching device.

According to an embodiment of the invention, the transfer gate comprises a discharging device. The discharging device can comprise a discharge switch connected between the transfer bus and an earth potential. The discharge switch allows a discharging of components and provides a path to ground. By discharging and grounding, the arrangement can be reset to its ground/basic state.

Preferably, the transfer gate comprises a peak current suppression device. The peak current suppression device can comprise a parallel connection of a transfer resistor and a resistor bypass switch. When one of the network elements is being connected to the main bus, the transfer resistor is able to bear the voltage difference between the main bus and the DC side of the network element and to limit the current. If the network element, e.g., a converter is not yet or only partly charged (in case the converter is a modular multilevel converter with switching modules each comprising a separate energy storage, then the energy storages are being charged), then the transfer resistor can limit the charging currents in the transfer bus and the converter. Subsequently, the resistor bypass switch can be closed to establish direct connection with the network element. By closing the resistor bypass switch, the peak current suppression device is deactivated. The deactivation of the current suppression function is advantageous when the transfer gate is used as a substitute for a regular gate during maintenance. In this case the transfer gate will constantly carry the operational currents of the corresponding element. The remaining gates in the switching station are still able to open. However, discharge and current suppression functionalities are not available during this period.

The fault separation device can comprise a parallel connection of a surge arrester and a fault current switch that is able to open under fault current conditions in a way that the current is commutated into the arrester. In this context, fault separation is understood as suppressing currents (e.g., fault currents) flowing into a predefined network area.

According to an embodiment of the invention each of the transfer and main gates comprise a disconnecting switch. The disconnecting switches provide a galvanic isolation between the main bus and the network elements in case the network elements shall be disconnected from each other.

According to another embodiment said transfer gate further comprises a current sensing device and/or a voltage sensing device. The current and/or voltage measurements can be used for a suitable control of the current and/or voltage in the DC node, particularly at a DC side of a converter.

The transfer gate can further comprise a converter for an active damping of voltage fluctuations. The converter can be used to replace other damping equipment such as resistors or choking coils.

The present invention further relates to a bipole HVDC station. Such stations often constitute an integral part of a DC network, where the converters of the HVDC station are network elements which shall be connected to the DC network in a possibly cost-efficient and reliable manner.

In accordance with the present invention, the bipole HVDC station comprises a first converter connected to a positive DC pole via an arrangement according to claim 1 and a second converter connected to a negative DC pole via another arrangement according to claim 1. The first converter is arranged between the positive DC pole and a neutral pole, whereas the second converter is arranged between the neutral pole and the negative pole. The neutral pole can hereby comprise a ground electrode, i.e., a non-insulated conductor system buried into ground or sea, designed for continuous operational currents.

The arrangement presented above is designed for a full functionality of each main gate in the switching station. When individual functions, such as fault separation, peak current suppression or controlled discharge are not required within a specific gate, unnecessary devices may be omitted without impacting the overall concept.

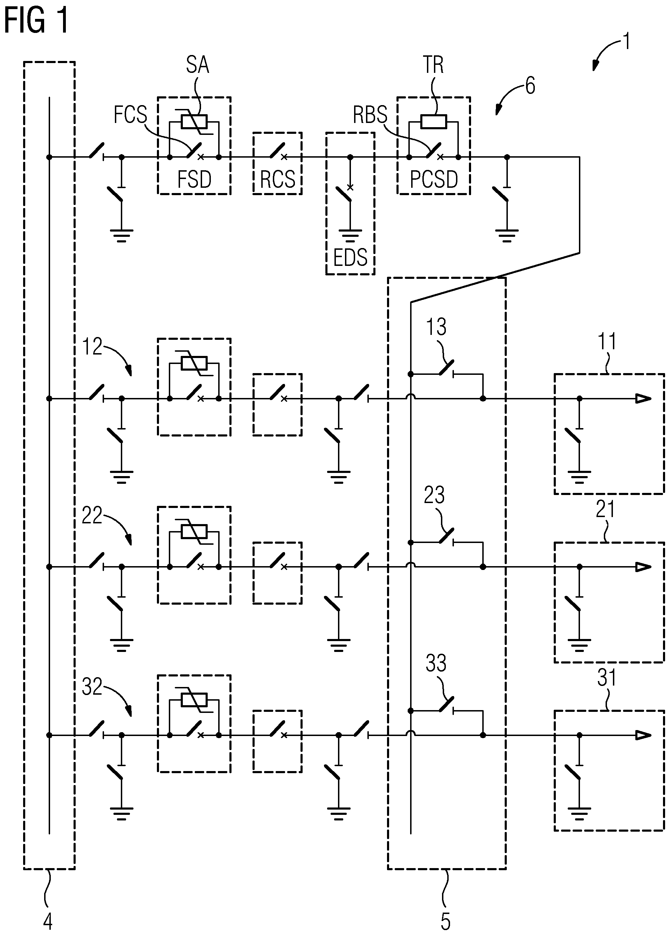

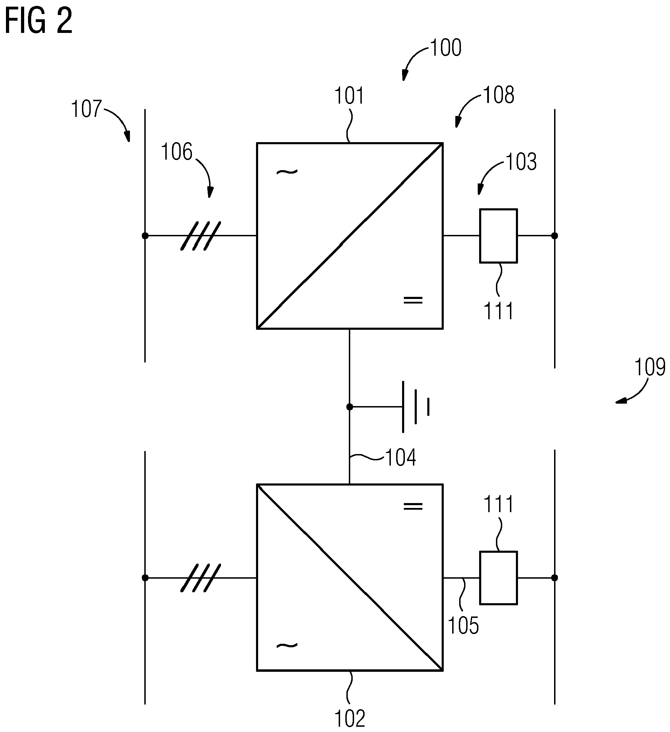

The invention will be further explained with reference to example embodiments illustrated in the figures 1 and 2.

Figures 1 and 2 schematically show embodiments of the arrangement according to the invention.

Figure 1 shows a high-voltage power transmission arrangement 1. The arrangement 1 comprises a first DC network element 11, which is a DC transmission line, a second DC network element 21, which is another DC transmission line, and a third DC network element 31, which is a third transmission line. It further comprises a main bus 4 connected to the first DC network element 11 via a first main gate 12, and with the second DC network element 21 via a second main gate 22. Correspondingly, the third network element 13 is connected to the main bus 4 via a third main gate 32. Further, a transfer bus 5 is provided, the transfer bus 5 being connected to the first DC network element 11 via a first transfer switch 13, with the second DC network element 21 via a second transfer switch 23, and with the main bus 4 via a transfer gate 6. Each of the main and transfer gates 12, 22, 32, 6 comprise a fault separation device FSD and a residual current switch RCS. The fault separation device FSD comprises a surge arrester SA and a fault current switch FCS arranged in parallel. The residual current switch RCS is designed to interrupt residual currents. For example, after a fault separation, the faulty item must be isolated from the network by opening corresponding switches. The common characteristic of these devices is, that they can interrupt the residual current and provide galvanic discontinuation of the current path between the faulty item and the rest of the network. In some applications, this functionality can be achieved by disconnectors. However, due to the limited residual current breaking capacity and the relatively long operating times of disconnectors, special residual current breaking switches might be required.

The transfer gate 6 further comprises a discharging device being an element discharge switch EDS. The element discharge switch EDS is designed to discharge any of the network elements 11, 12, 13. In addition, the transfer gate 6 comprises a peak current suppression device PCSD. The peak current suppression device PCSD is designed to suppress current peaks which may occur e.g., due to switching actions including those for element discharge. The peak current suppression device PCSD comprises a transfer resistor TR and a resistor bypass switch RBS arranged in parallel.

Figure 1 only shows the arrangement for a single pole. However, in bipole applications the transfer gate can be utilized for both poles. Considering layout, operational and reliability constraints, it appears advantageous to duplicate the concept shown in figure 1 for the other pole, thus obtaining the arrangement shown in figure 2. Figure 2 shows thereby a bipole converter station 100 with a first converter 101, arranged between a positive and a neutral pole 103, 104, and a second converter 102 arranged between the neutral pole 104 and a negative pole 105. Both, the first and the second converter 101, 102 have an AC side 106 connected to an AC grid 107 and a DC side 108. The DC side of the first converter is connected to a DC network 109 (a first bus bar of the DC network) via an arrangement 110 according to the embodiment shown in figure 1. Correspondingly, the DC side of the second converter 102 is connected to the DC network 109 (a second bus bar of the DC network) via another arrangement 111 as shown in figure 1.

## Claims

1. High-voltage power transmission arrangement (1) comprising
- a first DC network element (11),
- a second DC network element (21),
- a main bus (4) connected to
the first DC network element (11) via a first main gate (12), and the second DC network (21) element via a second main gate (22),
- a transfer bus (5) connected to
the first DC network element (11) via a first transfer switch (13),
the second DC network element (21) via a second transfer switch (23), and to
the main bus (4) via a transfer gate (6), wherein each of the main and transfer gates (12, 22, 6) comprises a fault separation device (FSD) and a residual current switch (RCS).

2. Arrangement according to claim 1, wherein the first and/or the second DC network elements (11, 21) each comprise DC operating equipment, in particular a DC transmission line and/or an AC/DC converter.

3. Arrangement according to one of the claims 1 or 2, wherein the first and/or the second transfer switches (12, 22) are disconnectors.

4. Arrangement according to one of the preceding claims, wherein the transfer gate comprises a discharging device (EDS).

5. Arrangement according to one of the preceding claims, wherein the transfer gate comprises a peak current suppression device (PCSD).

6. Arrangement according to one of the preceding claims, wherein the fault separation device (FSD) comprises a parallel connection of a surge arrester (SA) and a fault current switch (FCS).

7. Arrangement according to one of the preceding claims, wherein each of the transfer and main gates (12, 22, 6) comprise a disconnecting switch.

8. Arrangement (1) according to any of the preceding claims, wherein said transfer gate (6) further comprises a current sensing device and/or a voltage sensing device.

9. Arrangement (1) according to any of the preceding claims, wherein said transfer gate (6) further comprises a converter for an active damping of voltage fluctuations.

10. Bipole HVDC station (100) comprising a first converter (101) connected to a positive DC pole (103) via an arrangement (111) according to claim 1 and a second converter (102) connected to a negative DC pole (105) via another arrangement (111) according to claim 1.
